# EUROPEAN PATENT APPLICATION

(11) **EP 4 675 746 A1**
(43) Date of publication of application: **07.01.2026**
(21) Application number: 23924638.2
(22) Date of filing: 01.03.2023
(51) Int. Cl.: H01M 10/0587

(54) **ELECTROCHEMICAL DEVICE AND ELECTRONIC DEVICE**

(71) Applicant: Ningde Amperex Technology Limited, Ningde City, Fujian Province 352100 (CN)
(72) Inventor: LIU, Jianyu, Ningde, Fujian 352100 (CN); ZHANG, Shan, Ningde, Fujian 352100 (CN); TANG, Chao, Ningde, Fujian 352100 (CN)
(74) Representative: Kraus & Lederer PartGmbB
(86) International application number: PCT/CN2023/078986
(87) International publication number: WO 2024/178668

(57) **Abstract**

The present application relates to an electrochemical device and an electronic device. Specifically, the present application provides an electrochemical device including a cell, where the cell includes a positive electrode, a negative electrode, an electrolyte, and a separator, an outermost electrode of the cell has a curved portion and a straight portion, a length of the straight portion is L mm, a radius of the curved portion is D mm, and 5 ≤ L/D ≤ 10; and the electrolyte includes a dinitrile compound, and based on a mass of the electrolyte, a percentage of the dinitrile compound is A%, and 4 ≤ A ≤ 10. The electrochemical device of the present application has significantly improved high-temperature cycling performance.

## Description

### TECHNICAL FIELD

The present application relates to the field of energy storage, and specifically to an electrochemical device and an electronic device.

### BACKGROUND

Electrochemical devices (for example, lithium-ion batteries) have characteristics such as high specific energy, high operating voltage, low self-discharge rate, small volume, and light weight, and are therefore widely used in fields such as energy storage, portable electronic devices, and electric vehicles. With the expansion of application fields for lithium-ion batteries, higher requirements have been proposed for lithium-ion batteries, such as being thinner and lighter with longer lifespan. However, the shape of thin and light batteries leads to the depletion of electrolyte at the corners of the cell structure, thereby affecting their high-temperature cycling performance.

In view of this, it is indeed necessary to provide an electrochemical device that can offer improved high-temperature cycling performance.

### SUMMARY

The present application aims to address at least one of the problems existing in the related field to at least some extent by providing an electrochemical device and an electronic device.

According to one aspect of the present application, the present application provides an electrochemical device including a cell, where the cell includes a positive electrode, a negative electrode, an electrolyte, and a separator, where an outermost electrode of the cell has a curved portion and a straight portion, a length of the straight portion is L mm, a radius of the curved portion is D mm, and 5 ≤ L/D ≤ 10; and the electrolyte includes a dinitrile compound, and based on a mass of the electrolyte, a percentage of the dinitrile compound is A%, and 4 ≤ A ≤ 10. According to an embodiment of the present application, 7 ≤ L/D ≤ 9.

According to an embodiment of the present application, 5 ≤ L ≤ 30 or 1 ≤ D ≤ 5.

According to an embodiment of the present application, 10 ≤ L ≤ 20 or 1.5 ≤ D ≤ 2.5.

By controlling a ratio of the length of the straight portion to the radius of the curved portion of the cell, the depletion of electrolyte in the corner regions of the cell can be suppressed at the structural level. Using an electrolyte containing a specific percentage of the dinitrile compound can enhance the stability of the negative electrode, reduce the consumption of electrolyte at the negative electrode interface, and significantly slow down the depletion rate of the electrolyte in the corner regions of the cell. This promotes the high-temperature cycling performance of the electrochemical device.

According to an embodiment of the present application, the dinitrile compound has Formula 1: 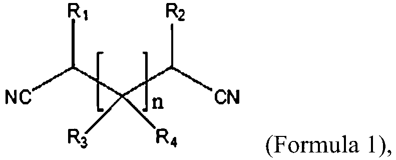 where:
R₁, R₂, R₃, and R₄ are each independently selected from hydrogen, halogen, or a substituted or unsubstituted C1-C5 alkyl group; and
n is an integer selected from 0 to 8; and when substituted, a substituent is a halogen.

According to an embodiment of the present application, the dinitrile compound includes at least one of the following compounds:

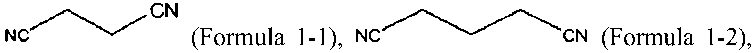

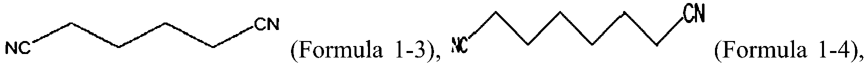

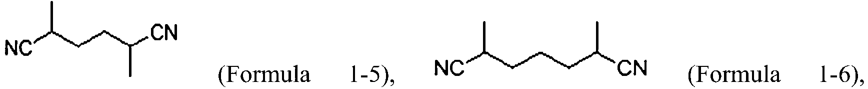

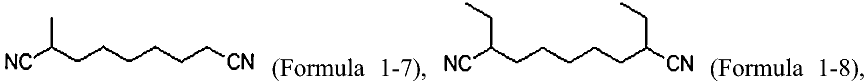

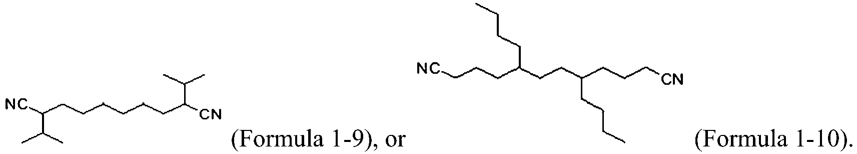

According to an embodiment of the present application, a width of the cell is W mm, and 10 ≤ W ≤ 40.

The cell with the above width has a small size, and when paired with the specific electrolyte of the present application (containing 4% to 10% of the dinitrile compound), it can more significantly improve the high-temperature cycling performance of small-sized electrochemical devices.

According to an embodiment of the present application, the positive electrode includes a positive electrode active material, the positive electrode active material contains a doping element, and the doping element is at least one selected from Ni or Al; and based on the mass of the positive electrode active material, a percentage of the doping element is C ppm, and 3000 ≤ C ≤ 5000.

The presence of Ni and/or Al helps to enhance the structural stability of the positive electrode active material. With the percentage of the doping element in the positive electrode active material being within the above range, a superior fixation effect on active oxygen can be achieved, a consumption rate of the electrolyte on the positive electrode side is reduced, and thus the high-temperature cycling performance of the electrochemical device is further improved.

According to an embodiment of the present application, the electrolyte further includes propionate, where the propionate includes at least one of ethyl propionate, propyl propionate, butyl propionate, pentyl propionate, fluoroethyl propionate, fluoropropyl propionate, fluorobutyl propionate, or fluoropentyl propionate, and based on the mass of the electrolyte, a percentage of the propionate is M%, and 20 ≤ M ≤ 60.

Adding a specific percentage of the propionate can significantly reduce the viscosity of the electrolyte, improve the fluidity of the electrolyte, and enable rapid replenishment of electrolyte in regions with local electrolyte depletion, thereby further improving the high-temperature cycling performance of the electrochemical device.

According to an embodiment of the present application, the electrolyte further includes at least one of 1,3-propane sultone, vinyl sulfate, vinylene carbonate, dimethyl carbonate, diethyl carbonate, ethyl methyl carbonate, or γ-butyrolactone.

According to an embodiment of the present application, the electrochemical device satisfies at least one of the following conditions:
(a) based on the mass of the electrolyte, a percentage of the 1,3-propane sultone is 0.5% to 5%;
(b) based on the mass of the electrolyte, a percentage of the vinyl sulfate is 0.1% to 1%;
(c) based on the mass of the electrolyte, a percentage of the vinylene carbonate is 0.1% to 1%;
(d) based on the mass of the electrolyte, a percentage of the dimethyl carbonate is 0.1% to 30%;
(e) based on the mass of the electrolyte, a percentage of the diethyl carbonate is 0.1% to 30%;
(f) based on the mass of the electrolyte, a percentage of the ethyl methyl carbonate is 0.1% to 30%; or
(g) based on the mass of the electrolyte, a percentage of the γ-butyrolactone is 0.01% to 5%.

Adding specific percentages of the above compounds to the electrochemical device helps to form a stable interface film, further reducing the consumption rate of the electrolyte at the interface, thereby further improving the high-temperature cycling performance of the electrochemical device.

According to an embodiment of the present application, the electrolyte further includes a trinitrile compound, where the trinitrile compound includes at least one of 1,3,5-pentanetricarbonitrile, 1,2,3-propanetricarbonitrile, 1,3,6-hexanetricarbonitrile, or 1,2,3-tris(2-cyanoethoxy)propane, and based on the mass of the electrolyte, a percentage of the trinitrile compound is 0.5% to 3%, preferably 1% to 2.5%. By adding the above percentage of the trinitrile compound to the electrochemical device and utilizing the stronger adsorption energy of the trinitrile compound to preferentially form a film on the electrode surface, the occurrence of side reactions on the electrode surface can be significantly suppressed, and the high-temperature cycling performance of small cells is further improved.

According to an embodiment of the present application, the electrolyte further includes a lithium salt, where the lithium salt includes at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

According to an embodiment of the present application, the separator includes a porous substrate and a porous layer on the surface of the porous substrate, and the porous layer contains polyvinylidene fluoride.

According to an embodiment of the present application, a weight-average molecular weight of the polyvinylidene fluoride is 600,000 to 3,000,000.

The porous layer in the separator containing polyvinylidene fluoride with a specific molecular weight can provide good adhesion performance between the separator and the electrode, thereby ensuring the performance of the electrochemical device.

According to another aspect of the present application, the present application provides an electronic device including the electrochemical device according to the present application.

The present application provides an electrochemical device and an electronic device. By controlling the ratio of the length of the straight portion to the radius of the curved portion of the cell, the depletion of electrolyte in the corner regions of the cell can be suppressed at the structural level. Using an electrolyte containing a specific percentage of the dinitrile compound can enhance the stability of the negative electrode, reduce the consumption of electrolyte at the negative electrode interface, and significantly slow down the depletion rate of the electrolyte in the corner regions of the cell. When a cell with a specific structure (5 ≤ L/D ≤ 10) is used in combination with a specific electrolyte (containing 4% to 10% of the dinitrile compound), the high-temperature cycling performance of the electrochemical device can be significantly improved.

Additional aspects and advantages of the present application will be partially described or presented in the subsequent descriptions, or explained through the implementation of some embodiments of the present application.

### BRIEF DESCRIPTION OF DRAWINGS

To describe embodiments of the present application, the following briefly describes the accompanying drawings required for describing these embodiments of the present application or the prior art. Apparently, the accompanying drawings described below are merely some embodiments of the present application. Persons skilled in the art may still derive drawings for other embodiments from structures shown in these accompanying drawings without creative efforts.

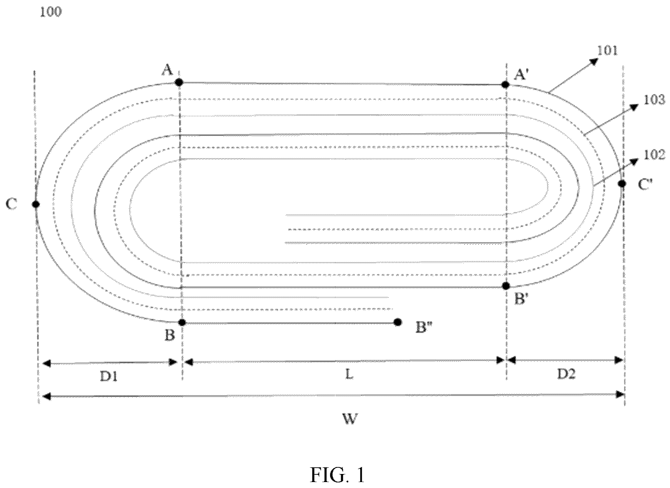

FIG. 1 is a schematic diagram of a structure of a cell according to an embodiment of the present application.

### DETAILED DESCRIPTION

Some embodiments of the present application will be described in detail below. These embodiments of the present application should not be construed as limiting the present application.

In the specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (excluding C); A and C (excluding B); B and C (excluding A); or all of A, B, and C. Item A may include a single element or a plurality of elements. Item B may include a single element or a plurality of elements. Item C may include a single element or a plurality of elements.

Electrochemical devices (for example, lithium-ion batteries) have been widely used in various fields due to their superior performance. In some fields, there are certain requirements for the shape of batteries. For example, with technological advancements, mobile phones are becoming thinner and lighter, which requires batteries to be thinner and lighter, posing higher demands on the performance of flat-type batteries. In the cell structure of flat-type batteries, the corner regions account for a relatively high proportion, and the electrolyte in the corner regions is easily squeezed out, leading to local electrolyte depletion, which blocks the transmission of lithium ions and adversely affects the high-temperature cycling performance of the electrochemical device.

To improve the high-temperature cycling performance of the electrochemical device, the present application provides an electrochemical device including a cell, where the cell includes a positive electrode, a negative electrode, an electrolyte, and a separator, where the outermost electrode of the cell has a curved portion and a straight portion, a length of the straight portion is L mm, a radius of the curved portion is D mm, and 5 ≤ L/D ≤ 10; and the electrolyte includes a dinitrile compound, and based on a mass of the electrolyte, a percentage of the dinitrile compound is A%, and 4 ≤ A ≤ 10.

As used herein, the "curved portion" and "straight portion" are portions of the outermost electrode of the cell after winding (to be specific, the electrode directly facing the packaging of the encapsulated cell), where the curved portion and the straight portion are alternately connected to form the outermost electrode of the wound cell. The "curved portion" is an arc-shaped portion of the outermost electrode of the wound cell, and includes a first curved portion formed by a first arc and a second curved portion formed by a second arc. The "straight portion" is a straight portion of the outermost electrode of the wound cell, that is, an electrode portion between the first curved portion and the second curved portion, and includes a first straight portion and a second straight portion. The "radius of the curved portion" refers to a distance from the perpendicular bisector of the line segment between two endpoints of a first (or second) arc of the first (or second) curved portion to the point of intersection of the perpendicular bisector and the first (or second) arc. Since the cell has two curved portions, the larger of the radii of the two curved portions is taken as the radius of the curved portion. The "length of the straight portion" refers to the larger value of a length of the first straight portion and a length of the second straight portion, as one of the first straight portion and the second straight portion is a winding end of the cell.

FIG. 1 is a schematic diagram of a structure of a cell according to an embodiment of the present application. The cell 100 includes a positive electrode 101, a negative electrode 102, and a separator 103 between the positive electrode 101 and the negative electrode 102. The wound cell is flat, and in a width (W) direction of the cell, the outermost electrode of the cell includes a first curved portion (left side), a second curved portion (right side), a first straight portion (upper side), and a second straight portion (lower side), where the second curved portion, the first straight portion, the first curved portion, and the second straight portion are sequentially connected to form the outermost electrode of the cell. The first curved portion is formed by a first arc along points A, C, and B, where point A is the point of intersection of the first curved portion and the first straight portion, point B is the point of intersection of the first curved portion and the second straight portion; and the second curved portion is formed by a second arc along points A', C', and B', where point A' is the point of intersection of the second curved portion and the first straight portion, and point B' is the point of intersection of the second curved portion and a straight portion of the sub-outermost electrode corresponding to the second straight portion. The first straight portion is formed by a line segment from point A to point A', and the second straight portion is formed by a line segment from point B to point B" (point B" being the endpoint of the outermost electrode). Points A and B are the endpoints of the first arc, point C is the point of intersection of the perpendicular bisector of a line segment between points A and B and the first arc, and a distance between the perpendicular bisector of a line segment between points A and B and point C is a radius D1 of the first curved portion. Points A' and B' are the endpoints of the second arc, point C' is the point of intersection of the perpendicular bisector of a line segment between points A' and B' and the second arc, and a distance between the perpendicular bisector of a line segment between points A' and B' and point C' is a radius D2 of the second curved portion. The larger value of the curved portions D1 and D2 is taken as a radius D of the curved portion (that is, the radius D1 of the first curved portion in FIG. 1). A length of the line segment from point A to point A' is a length L1 of the first straight portion, and a length of the line segment from point B to point B" is a length L2 of the second straight portion. The larger value of L1 and L2 is taken as a length L of the straight portion (that is, the length L1 of the first straight portion in FIG. 1).

By controlling a ratio of the length of the straight portion to the radius of the curved portion of the cell, the depletion of electrolyte in the corner regions of the cell can be suppressed at the structural level. Using an electrolyte containing a specific percentage of the dinitrile compound can enhance the stability of the negative electrode, reduce the consumption of electrolyte at the negative electrode interface, and significantly slow down the depletion rate of the electrolyte in the corner regions of the cell. When a cell with a specific structure (5 ≤ L/D ≤ 10) is used in combination with a specific electrolyte (containing 4% to 10% of the dinitrile compound), the high-temperature cycling performance of the electrochemical device can be significantly improved.

In some embodiments, 7 ≤ L/D ≤ 9. In some embodiments, L/D is 5, 6, 7, 8, 9, 10, or within a range defined by any two of the above values.

In some embodiments, 5 ≤ L ≤ 30. In some embodiments, 8 ≤ L ≤ 25. In some embodiments, 10 ≤ L ≤ 20. In some embodiments, 12 ≤ L ≤ 15. In some embodiments, L is 5, 8, 10, 12, 15, 18, 20, 22, 25, 28, 30, or within a range defined by any two of the above values.

In some embodiments, 1 ≤ D ≤ 5. In some embodiments, 1.5 ≤ D ≤ 2.5. In some embodiments, D is 1, 1.5, 2, 2.5, 3, 3.5, 4, 4.5, 5, or within a range defined by any two of the above values.

In some embodiments, 5 ≤ A ≤ 8. In some embodiments, A is 4, 5, 6, 7, 8, 9, 10, or within a range defined by any two of the above values.

In some embodiments, the dinitrile compound has Formula 1: 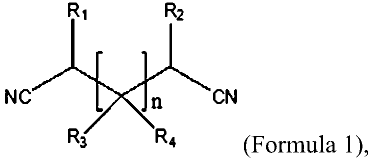 where:
R₁, R₂, R₃, and R₄ are each independently selected from hydrogen, halogen, or a substituted or unsubstituted C1-C5 alkyl group; and
n is an integer selected from 0 to 8; and when substituted, a substituent is a halogen.

In some embodiments, the dinitrile compound includes at least one of the following compounds:

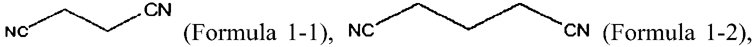

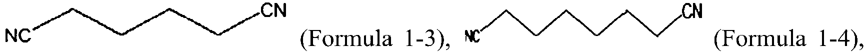

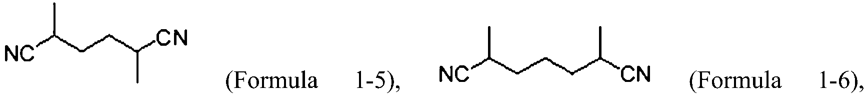

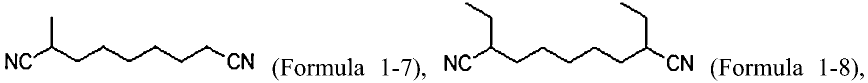

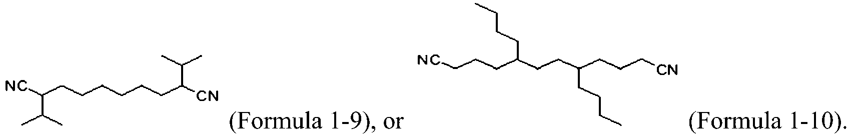

In some embodiments, a width of the cell is W mm, and 10 ≤ W ≤ 40. The width W of the cell is equal to the sum of the length L of the straight portion and the radii of the two curved portions (as shown in FIG. 1, D1 + D2). In some embodiments, W is 10, 15, 20, 25, 30, 35, 40, or within a range defined by any two of the above values. The cell with the above width has a small size, and the corner regions of small-sized cells account for a higher proportion, making the squeezing out of the electrolyte more prominent. Surprisingly, the specific electrolyte of the present application (containing 4% to 10% of the dinitrile compound) can exhibit superior effects on small-sized cells, significantly improving the high-temperature cycling performance of small-sized electrochemical devices.

In some embodiments, the electrolyte further includes propionate, where the propionate includes at least one of ethyl propionate, propyl propionate, butyl propionate, pentyl propionate, fluoroethyl propionate, fluoropropyl propionate, fluorobutyl propionate, or fluoropentyl propionate. Adding the propionate can significantly reduce the viscosity of the electrolyte, improve the fluidity of the electrolyte, and enable rapid replenishment of electrolyte in regions with local electrolyte depletion, thereby further improving the high-temperature cycling performance of the electrochemical device.

In some embodiments, based on the mass of the electrolyte, a percentage of the propionate is M%, and 20 ≤ M ≤ 60. In some embodiments, 30 ≤ M ≤ 50. In some embodiments, M is 20, 25, 30, 35, 40, 45, 50, 55, 60, or within a range defined by any two of the above values. With M being within the above range, the electrolyte has excellent ion transmission characteristics, thereby further improving the high-temperature cycling performance of the electrochemical device.

In some embodiments, the electrolyte further includes at least one of 1,3-propane sultone, vinyl sulfate, vinylene carbonate, dimethyl carbonate, diethyl carbonate, ethyl methyl carbonate, or γ-butyrolactone. The presence of these compounds helps to form a stable interface film, further reducing the consumption rate of the electrolyte at the interface, thereby further improving the high-temperature cycling performance of the electrochemical device.

In some embodiments, based on the mass of the electrolyte, a percentage of the 1,3-propane sultone is 0.5% to 5%. In some embodiments, based on the mass of the electrolyte, the percentage of the 1,3-propane sultone is 1% to 3%. In some embodiments, based on the mass of the electrolyte, the percentage of the 1,3-propane sultone is 0.5%, 1%, 1.5%, 2%, 2.5%, 3%, 3.5%, 4%, 4.5%, 5%, or within a range defined by any two of the above values.

In some embodiments, based on the mass of the electrolyte, a percentage of the vinyl sulfate is 0.1% to 1%. In some embodiments, based on the mass of the electrolyte, the percentage of the vinyl sulfate is 0.3% to 0.6%. In some embodiments, based on the mass of the electrolyte, the percentage of the vinyl sulfate is 0.1%, 0.3%, 0.5%, 0.8%, 1%, or within a range defined by any two of the above values.

In some embodiments, based on the mass of the electrolyte, a percentage of the vinylene carbonate is 0.1% to 1%. In some embodiments, based on the mass of the electrolyte, the percentage of the vinylene carbonate is 0.3% to 0.6%. In some embodiments, based on the mass of the electrolyte, the percentage of the vinylene carbonate is 0.1%, 0.3%, 0.5%, 0.8%, 1%, or within a range defined by any two of the above values.

In some embodiments, based on the mass of the electrolyte, a percentage of the dimethyl carbonate is 0.1% to 30%. In some embodiments, based on the mass of the electrolyte, the percentage of the dimethyl carbonate is 0.5% to 25%. In some embodiments, based on the mass of the electrolyte, the percentage of the dimethyl carbonate is 1% to 20%. In some embodiments, based on the mass of the electrolyte, the percentage of the dimethyl carbonate is 5% to 15%. In some embodiments, based on the mass of the electrolyte, the percentage of the dimethyl carbonate is 10% to 12%. In some embodiments, based on the mass of the electrolyte, the percentage of the dimethyl carbonate is 0.1%, 0.5%, 1%, 5%, 10%, 15%, 20%, 25%, 30%, or within a range defined by any two of the above values.

In some embodiments, based on the mass of the electrolyte, a percentage of the diethyl carbonate is 0.1% to 30%. In some embodiments, based on the mass of the electrolyte, the percentage of the diethyl carbonate is 0.5% to 25%. In some embodiments, based on the mass of the electrolyte, the percentage of the diethyl carbonate is 1% to 20%. In some embodiments, based on the mass of the electrolyte, the percentage of the diethyl carbonate is 5% to 15%. In some embodiments, based on the mass of the electrolyte, the percentage of the diethyl carbonate is 10% to 12%. In some embodiments, based on the mass of the electrolyte, the percentage of the diethyl carbonate is 0.1%, 0.5%, 1%, 5%, 10%, 15%, 20%, 25%, 30%, or within a range defined by any two of the above values.

In some embodiments, based on the mass of the electrolyte, a percentage of the ethyl methyl carbonate is 0.1% to 30%. In some embodiments, based on the mass of the electrolyte, the percentage of the ethyl methyl carbonate is 0.5% to 25%. In some embodiments, based on the mass of the electrolyte, the percentage of the ethyl methyl carbonate is 1% to 20%. In some embodiments, based on the mass of the electrolyte, the percentage of the ethyl methyl carbonate is 5% to 15%. In some embodiments, based on the mass of the electrolyte, the percentage of the ethyl methyl carbonate is 10% to 12%. In some embodiments, based on the mass of the electrolyte, the percentage of the ethyl methyl carbonate is 0.1%, 0.5%, 1%, 5%, 10%, 15%, 20%, 25%, 30%, or within a range defined by any two of the above values.

In some embodiments, based on the mass of the electrolyte, a percentage of the γ-butyrolactone is 0.01% to 5%. In some embodiments, based on the mass of the electrolyte, the percentage of the γ-butyrolactone is 0.05% to 3%. In some embodiments, based on the mass of the electrolyte, the percentage of the γ-butyrolactone is 0.1% to 2%. In some embodiments, based on the mass of the electrolyte, the percentage of the γ-butyrolactone is 0.5% to 1%. In some embodiments, based on the mass of the electrolyte, the percentage of the γ-butyrolactone is 0.01%, 0.05%, 0.1%, 0.5%, 1%, 2%, 3%, 4%, 5%, or within a range defined by any two of the above values.

Controlling the percentage of the 1,3-propane sultone, vinyl sulfate, vinylene carbonate, dimethyl carbonate, diethyl carbonate, ethyl methyl carbonate, or γ-butyrolactone in the electrolyte to be within the above ranges helps to further improve the high-temperature cycling performance of the electrochemical device.

In some embodiments, the electrolyte further includes a trinitrile compound, where the trinitrile compound includes at least one of 1,3,5-pentanetricarbonitrile 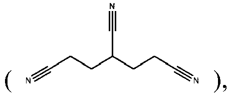 1,2,3-propanetricarbonitrile 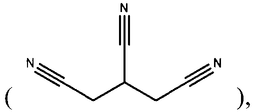 1,3,6-hexanetricarbonitrile 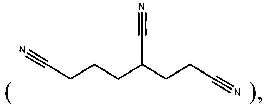 or 1,2,3-tris(2-cyanoethoxy)propane 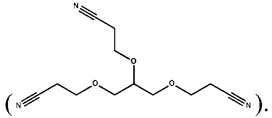 When the electrolyte includes the trinitrile compound, it helps to further improve the high-temperature cycling performance of the electrochemical device.

In some embodiments, based on the mass of the electrolyte, a percentage of the trinitrile compound is 0.5% to 3%. In some embodiments, based on the mass of the electrolyte, the percentage of the trinitrile compound is 1% to 2.5%. In some embodiments, based on the mass of the electrolyte, the percentage of the trinitrile compound is 0.5%, 1%, 1.5%, 2%, 2.5%, 3%, or within a range defined by any two of the above values.

In some embodiments, the electrolyte further includes a lithium salt, where the lithium salt includes at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

In some embodiments, based on the mass of the electrolyte, a percentage of the lithium salt is 10% to 15%. In some embodiments, based on the mass of the electrolyte, the percentage of the lithium salt is 12% to 15%. With the percentage of the lithium salt being within the above range, the electrolyte has suitable ionic conductivity and viscosity, which helps to improve the high-temperature cycling performance of the electrochemical device.

In some embodiments, the positive electrode includes a positive electrode current collector and a positive electrode active material layer disposed on the positive electrode current collector. The positive electrode active material layer may be disposed on one side or two sides of the positive electrode current collector. In some embodiments, the positive electrode current collector may be aluminum foil, or certainly, other positive electrode current collectors commonly used in the art may also be used. In some embodiments, a thickness of the positive electrode current collector may be 1 µm to 200 µm. In some embodiments, the positive electrode active material layer may be applied on only a partial region of the positive electrode current collector. In some embodiments, a thickness of the positive electrode active material layer may be 10 µm to 500 µm. It should be understood that this is merely an example, and any other suitable thickness may be adopted.

In some embodiments, the positive electrode active material layer includes a positive electrode active material. In some embodiments, the positive electrode active material includes LiCoO₂, LiNiO₂, LiMn₂O₄, LiCo_{1-y}M_{y}O₂, LiNi_{1-y}M_{y}O₂, LiMn_{2-y}M_{y}O₄, and LiNiₓCo_{y}Mn_{z}M_{1-x-y-z}O₂, where M is at least one selected from Fe, Co, Ni, Mn, Mg, Cu, Zn, Al, Sn, B, Ga, Cr, Sr, V, or Ti, and 0 ≤ y ≤ 1, 0 ≤ x ≤ 1, 0 ≤ z ≤ 1, x + y + z ≤ 1. In some embodiments, the positive electrode active material may include at least one of lithium cobalt oxide, lithium manganese oxide, lithium iron phosphate, lithium manganese iron phosphate, lithium nickel cobalt manganese oxide, lithium nickel cobalt aluminum oxide, or lithium nickel manganese oxide, and the positive electrode active material may undergo doping and/or coating processing.

In some embodiments, the positive electrode active material contains a doping element, where the doping element is at least one selected from Ni and Al. The presence of Ni and/or Al helps to enhance the structural stability of the positive electrode active material, and helps to further improve the high-temperature cycling performance of the electrochemical device.

In some embodiments, based on a mass of the positive electrode active material, a percentage of the doping element is C ppm, and 3000 ≤ C ≤ 5000. In some embodiments, C is 3000, 3500, 4000, 4500, 5000, or within a range defined by any two of the above values. With the percentage of the doping element in the positive electrode active material being within the above range, a superior fixation effect on active oxygen can be achieved, the structural stability of the positive electrode active material is enhanced, a consumption rate of the electrolyte on the positive electrode side is reduced, and thus the high-temperature cycling performance of the electrochemical device is further improved.

There are no restrictions on the method of doping Ni and/or Al in the positive electrode active material, and any applicable preparation method in the art may be used. For example, an aluminum-containing compound (for example, Al₂O₃, Al(OH)₃, AlF₃) or a nickel-containing compound (for example, NiO) may be added to the positive electrode active material LiCoO₂ to obtain the foregoing modified positive electrode active material. Additionally, the percentages of Ni and/or Al doping elements added in the positive electrode active material layer can be adjusted by controlling the amount of Ni and/or Al doping elements added.

In some embodiments, the positive electrode active material layer further includes a binder and a conductive agent. In some embodiments, the binder in the positive electrode active material layer may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, the conductive agent in the positive electrode active material layer may include at least one of conductive carbon black, acetylene black, Ketjen black, flake graphite, graphene, carbon nanotubes, or carbon fibers. In some embodiments, a mass ratio of the positive electrode active material, conductive agent, and binder in the positive electrode active material layer may be (70-98):(1-15):(1-15). It should be understood that the descriptions above are merely examples, and any other suitable material, thickness, and mass ratio may be adopted for the positive electrode active material layer.

In some embodiments, the negative electrode may include a negative electrode current collector and a negative electrode active material layer disposed on the negative electrode current collector. The negative electrode active material layer may be disposed on one side or two sides of the negative electrode current collector. In some embodiments, the negative electrode current collector may be at least one of copper foil, aluminum foil, nickel foil, or a carbon-based current collector. In some embodiments, a thickness of the negative electrode current collector may be 1 µm to 200 µm. In some embodiments, the negative electrode active material layer may be applied on only a partial region of the negative electrode current collector. In some embodiments, the thickness of the negative electrode active material layer may be 10 µm to 500 µm. It should be understood that this is merely an example, and any other suitable thickness may be adopted.

In some embodiments, the negative electrode active material layer includes a negative electrode active material. In some embodiments, the negative electrode active material in the negative electrode active material layer includes at least one of lithium metal, natural graphite, artificial graphite, or a silicon-based material. In some embodiments, the silicon-based material includes at least one of silicon, a silicon-oxygen compound, a silicon-carbon compound, or a silicon alloy.

In some embodiments, the negative electrode active material layer may further include a conductive agent and/or a binder. The conductive agent in the negative electrode active material layer may include at least one of carbon black, acetylene black, Ketjen black, flake graphite, graphene, carbon nanotubes, carbon fibers, or carbon nanowires. In some embodiments, the binder in the negative electrode active material layer may include at least one of carboxymethyl cellulose (CMC), polyacrylic acid, polyacrylate salt, polyacrylate, polyvinylpyrrolidone, polyaniline, polyimide, polyamideimide, polysiloxane, styrene-butadiene rubber, epoxy resin, polyester resin, polyurethane resin, or polyfluorene. It should be understood that the materials disclosed above are merely exemplary, and the negative electrode active material layer may use any other suitable materials. In some embodiments, a mass ratio of the negative electrode active material, conductive agent, and binder in the negative electrode active material layer may be (80-99):(0.5-10):(0.5-10). It should be understood that this is merely an example and not intended to limit the present application.

In some embodiments, the separator includes at least one of polyethylene, polypropylene, polyvinylidene fluoride, polyethylene terephthalate, polyimide, or aramid. For example, the polyethylene includes at least one of high-density polyethylene, low-density polyethylene, or ultra-high molecular weight polyethylene. In particular, the polyethylene and polypropylene have a good effect in preventing short circuits and can enhance the stability of the battery through a shutdown effect. In some embodiments, a thickness of the separator ranges from approximately 3 µm to 20 µm.

In some embodiments, the separator includes a porous substrate and an adhesive porous layer formed on at least one side of the porous substrate, where the adhesive porous layer contains polyvinylidene fluoride-based resin. The adhesive porous layer can improve the heat resistance, oxidation resistance, and electrolyte wettability of the separator, as well as enhance the adhesion between the separator and the electrode.

In some embodiments, a weight-average molecular weight of the polyvinylidene fluoride-based resin is 600,000 to 3,000,000. In some embodiments, the weight-average molecular weight of the polyvinylidene fluoride-based resin is 1,000,000 to 2,000,000. With the weight-average molecular weight of the polyvinylidene fluoride-based resin being within the above range, the separator and the electrode have high adhesion, thereby improving the contact therebetween, while the separator has good formability. For a wound cell with a high-adhesion separator, as cycling progresses, the anode rebound gradually increases, easily squeezing out the electrolyte in the corner regions. However, it has been surprisingly found that the specific electrolyte of the present application (containing 4% to 10% of the dinitrile compound) is particularly suitable for wound cells with high-adhesion separators, enabling the electrochemical device to have excellent high-temperature cycling performance.

The present application further provides an electronic device including the electrochemical device described in the present application. The electronic device of some embodiments of the present application is not particularly limited and may be any electronic device known in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The preparation processes of the electrochemical device and the electronic device are well known to those skilled in the art, and the present application has no particular limitations. For example, a lithium-ion battery can be manufactured through the following process: a positive electrode and a negative electrode are stacked with a separator therebetween, and the stack is put into a housing after operations such as winding and folding as needed. The housing is injected with an electrolyte and then sealed. In addition, an over-current protection element, a guide plate, or the like may also be placed into the housing as needed, so as to prevent a pressure inside the lithium-ion battery from rising too high, and the lithium-ion battery from over-charging and over-discharging.

The preparation of a lithium-ion battery is described below as an example, combined with specific embodiments, and those skilled in the art will understand that the preparation methods described in the present application are merely examples, and any other suitable preparation methods are within the scope of the present application.

### Examples

The following describes the performance evaluation of lithium-ion batteries according to the examples and comparative examples of the present application.

### I. Preparation of lithium-ion battery

### 1. Preparation of positive electrode

For undoped positive electrode active material, lithium cobalt oxide (LiCoO₂) was used as the positive electrode active material.

For doped positive electrode active material, lithium cobalt oxide (LiCoO₂) and one or more oxides (for example, a mixture of nickel oxide (NiO) and aluminum oxide (Al₂O₃)) containing doping elements were mixed and blended at 300 r/min for 20 min in a high-speed mixer, and the resulting mixture was placed in an air kiln, heated to 820°C at 5°C/min, held for 24 h, naturally cooled, and then taken out for sieving through a 300-mesh sieve to obtain a modified positive electrode active material (that is, modified lithium cobalt oxide).

The positive electrode active material, conductive agent carbon nanotubes (CNT), and polyvinylidene fluoride (PVDF) were mixed at a weight ratio of 95:2:3, with N-methylpyrrolidone (NMP) added as a solvent, and the resulting mixture was stirred under a vacuum mixer until a uniform system with a solid content of 75wt% was formed, resulting in a positive electrode slurry. The positive electrode slurry was evenly applied on one side of a 12 µm thick aluminum foil positive electrode current collector, dried at 85°C, and cold-pressed to obtain a positive electrode active material layer with a thickness of 100 µm, resulting in a positive electrode plate. The above steps were repeated on the other side of the positive electrode plate to obtain a double-sided positive electrode plate coated with the positive electrode active material layer. The positive electrode plate was cut to samples of 74 mm × 867 mm, and tabs were welded for later use.

### 2. Preparation of negative electrode

Artificial graphite, styrene-butadiene rubber (SBR), and carboxymethyl cellulose (CMC) were mixed at a mass ratio of 95:2:3, with deionized water added as a solvent to prepare a slurry with a solid content of 70wt%, and the slurry was stirred evenly. The slurry was evenly applied on one side of an 8 µm thick copper foil, dried at 110°C, and cold-pressed to obtain a negative electrode active material layer with a thickness of 150 µm, resulting in a single-sided negative electrode plate coated with the negative electrode active material layer. The application steps were repeated on the other side of the negative electrode plate to obtain a double-sided negative electrode plate coated with the negative electrode active material layer. The negative electrode plate was cut to samples of 74 mm × 867 mm, and tabs were welded for later use. The defect degree Id/Ig of the negative electrode plate was 0.17.

### 3. Preparation of separator

A 15 µm thick polyethylene (PE) porous polymer film was used as the separator.

### 4. Preparation of electrolyte

In an argon atmosphere glovebox with a water content of less than 10 ppm, ethylene carbonate (EC), propylene carbonate (PC), and diethyl carbonate (DEC) were evenly mixed at a weight ratio of 40-A:A:60 as the base solvent, with LiPF₆ added, and the resulting mixture was stirred evenly to produce an electrolyte, where a concentration of LiPF₆ was 12.5wt%, and the percentage A of propylene carbonate was set according to the requirements of each of the examples and comparative examples.

Additional components were added to the base electrolyte according to the settings of each of the examples or comparative examples to obtain the electrolyte.

### 5. Preparation of lithium-ion battery

The positive electrode plate, the separator, and the negative electrode plate were stacked in order, with the separator placed between the positive electrode plate and the negative electrode plate for isolation, and the stack was wound to obtain an electrode assembly. The L/D value was controlled by adjusting the winding parameters according to the settings of each of the examples or comparative examples. The electrode assembly was placed in an aluminum-plastic film packaging bag, moisture was removed at 80°C, the prepared electrolyte was injected, and the battery was vacuum-sealed, allowed to stand, formed, and shaped to obtain a lithium-ion battery.

### II. Test methods

### 1. Test method for length of straight portion and radius of curved portion of the cell

Using a computed tomography (CT) scanner, the corner and main body of the lithium-ion battery were scanned at 300% magnification to obtain cross-sectional images. The length of the first straight portion was measured and denoted as L1, the length of the second straight portion was measured and denoted as L2, and the larger value was taken as the length L of the straight portion. The radius of the first curved portion was measured and denoted as D1, the radius of the second curved portion was measured and denoted as D2, and the larger value was taken as the radius D of the curved portion.

### 2. Test method for percentages of doping elements in positive electrode active material

The active material of the positive electrode plate, washed with dimethyl carbonate (DMC), was scraped off with a scraper and dissolved in a mixed solvent (for example, 0.4 g of positive electrode active material was dissolved in a mixed solvent of 10 ml of aqua regia (nitric acid and hydrochloric acid mixed at 1:1) and 2 ml of HF), diluted to 100 mL, and then the percentage of metal elements such as Ni or Al in the solution was tested using an ICP analyzer, with the unit being ppm.

### 3. Test method for cycling performance of lithium-ion battery

At 45°C, the lithium-ion battery was charged at 0.7C (rate) to 4.5 V, then charged at constant voltage until the current reached 0.05C, and discharged at a constant current of 1C to 3.0 V, constituting one charge-discharge cycle. The discharge capacity of the first cycle of the lithium-ion battery was recorded. The lithium-ion battery was subjected to charge-discharge cycles according to the above method, and the discharge capacity of each cycle was recorded until the discharge capacity of the lithium-ion battery decayed to 80% of the discharge capacity of the first cycle, and the number of charge-discharge cycles was recorded.

### III. Test results

Table 1 shows the effects of the ratio of the length of the straight portion to the radius of the curved portion (L/D) of the cell and the dinitrile compound and its percentage in the electrolyte on the high-temperature cycling performance of the lithium-ion battery.

**Table 1**

| | Length L of straight portion (mm) | Radius D of curved portion (mm) | L/D | Percentage A of dinitrile compound (wt%) | | | Cycle count |
|---|---|---|---|---|---|---|---|
| | | | | Formula 1-1 | Formula 1-6 | Formula 1-9 | |
| Example 1 | 15 | 1.8 | 8.3 | 4 | 0 | 0 | 530 |
| Example 2 | 15 | 1.8 | 8.3 | 5.5 | 0 | 0 | 545 |
| Example 3 | 15 | 1.8 | 8.3 | 7 | 0 | 0 | 550 |
| Example 4 | 15 | 1.8 | 8.3 | 8.5 | 0 | 0 | 540 |
| Example 5 | 15 | 1.8 | 8.3 | 10 | 0 | 0 | 535 |
| Example 6 | 9 | 1.8 | 5.0 | 4 | 0 | 0 | 510 |
| Example 7 | 9 | 1.8 | 5.0 | 7 | 0 | 0 | 540 |
| Example 8 | 9 | 1.8 | 5.0 | 10 | 0 | 0 | 515 |
| Example 9 | 25 | 2.5 | 10.0 | 4 | 0 | 0 | 525 |
| Example 10 | 25 | 2.5 | 10.0 | 7 | 0 | 0 | 535 |
| Example 11 | 25 | 2.5 | 10.0 | 10 | 0 | 0 | 520 |
| Example 12 | 15 | 1.8 | 8.3 | 0 | 4 | 0 | 540 |
| Example 13 | 15 | 1.8 | 8.3 | 0 | 0 | 4 | 525 |
| Example 14 | 5 | 1 | 5 | 4 | 0 | 0 | 505 |
| Example 15 | 30 | 5 | 6 | 4 | 0 | 0 | 530 |
| Comparative Example 1 | 15 | 1.8 | 8.3 | 2 | 0 | 0 | 430 |
| Comparative Example 2 | 15 | 1.8 | 8.3 | 15 | 0 | 0 | 400 |
| Comparative Example 3 | 30 | 1.8 | 16.7 | 2 | 0 | 0 | 440 |
| Comparative Example 4 | 30 | 1.8 | 16.7 | 15 | 0 | 0 | 430 |
| Comparative Example 5 | 28 | 7 | 4 | 2 | 0 | 0 | 400 |

In Comparative Example 1, the electrolyte contains too little dinitrile compound, in Comparative Example 2, the electrolyte contains too much dinitrile compound, in Comparative Examples 3 and 4, not only is the L/D value of the cell too large, but the percentage of the dinitrile compound in the electrolyte is also too low or too high, and in Comparative Example 5, the L/D value of the cell is too small. These lithium-ion batteries all have low cycle counts, making them difficult to meet usage requirements.

As shown in Examples 1 to 15, when the L/D value of the cell is in the range of 5 to 10 and the electrolyte contains 4% to 10% of the dinitrile compound, the depletion of electrolyte in the corner regions of the cell at the structural level can be suppressed, and the consumption of electrolyte at the negative electrode interface is reduced. This significantly slows down the depletion rate of the electrolyte in the corner regions of the cell, thereby significantly increasing the cycle count of the lithium-ion battery and improving its high-temperature cycling performance. When the L/D value is in the range of 7to 9, 5 ≤ L ≤ 30 and 1 ≤ D ≤ 5, or 10 ≤ L ≤ 20 and 1.5 ≤ D ≤ 2, the high-temperature cycling performance of the lithium-ion battery can be further improved.

Table 2 shows the effects of doping elements and their percentages in the positive electrode active material on the high-temperature cycling performance of the lithium-ion battery.

**Table 2**

| | Length L of straight portion (mm) | Radius D of curved portion (mm) | L/D | Percentage A of Formula 1-1 (wt%) | Percentage of Ni (ppm) | Percentage of Al content (ppm) | Percentage C of total doping element (ppm) | Cycle count |
|---|---|---|---|---|---|---|---|---|
| Example 3 | 15 | 1.8 | 8.3 | 7 | 0 | 0 | 0 | 550 |
| Example 16 | 15 | 1.8 | 8.3 | 7 | 1000 | 2000 | 3000 | 570 |
| Example 17 | 15 | 1.8 | 8.3 | 7 | 1000 | 3000 | 4000 | 600 |
| Example 18 | 15 | 1.8 | 8.3 | 7 | 1500 | 2500 | 5000 | 585 |
| Example 19 | 15 | 1.8 | 8.3 | 7 | 3000 | 0 | 3000 | 560 |
| Example 20 | 15 | 1.8 | 8.3 | 7 | 0 | 3000 | 3000 | 560 |
| Example 21 | 15 | 1.8 | 8.3 | 7 | 0 | 1000 | 1000 | 560 |
| Example 22 | 15 | 1.8 | 8.3 | 7 | 0 | 7000 | 7000 | 560 |

The results show that when the positive electrode active material contains Ni and/or Al doping elements, the depletion of electrolyte in the corner regions can be reduced, and the structural stability of the positive electrode active material is enhanced. Forming a more stable lithium-ion transmission interface on the surface of the positive electrode active material can further improve the high-temperature cycling performance of the lithium-ion battery. When the percentages of doping elements in the positive electrode active material are 3000 ppm to 5000 ppm, the high-temperature cycling performance of the lithium-ion battery is optimal.

Table 3 shows the effects of propionate in the electrolyte on the high-temperature cycling performance of the lithium-ion battery. Except for the percentage of the propyl propionate, Examples 23 to 26 have the same settings as Example 3, and Example 27 has the same settings as Example 17.

**Table 3**

| | Length L of straight portion (mm) | Radius D of curved portion (mm) | L/D | Percentage A of Formula 1-1 (wt%) | Percentage C of total doping element (ppm) | Percentage M of propyl propionate (wt%) | Cycle count |
|---|---|---|---|---|---|---|---|
| Example 3 | 15 | 1.8 | 8.3 | 7 | 0 | 0 | 550 |
| Example 23 | 15 | 1.8 | 8.3 | 7 | 0 | 20 | 570 |
| Example 24 | 15 | 1.8 | 8.3 | 7 | 0 | 40 | 590 |
| Example 25 | 15 | 1.8 | 8.3 | 7 | 0 | 60 | 580 |
| Example 26 | 15 | 1.8 | 8.3 | 7 | 0 | 10 | 560 |
| Example 27 | 15 | 1.8 | 8.3 | 7 | 4000 | 40 | 630 |

The results show that when the propionate (for example, propyl propionate) is further added to the electrolyte, interface protection can be enhanced and the kinetics of the battery is further improved. This reduces polarization and slows down side reactions, and can further improve the high-temperature cycling performance of the lithium-ion battery. When the percentage of the propionate in the electrolyte is 20% to 60%, the high-temperature cycling performance of the lithium-ion battery is optimal.

Table 4 shows the effects of additives in the electrolyte on the high-temperature cycling performance of the lithium-ion battery. Except for the percentage of the 1,3-propane sultone or 1,3,6-hexanetricarbonitrile, Examples 28 to 30 have the same settings as Example 3, and Example 31 has the same settings as Example 17.

**Table 4**

| | Length L of straight portion (mm) | Radius D of curved portion (mm) | L/D | Percentage A of Formula 1-1 (wt%) | Percentage C of total doping element (ppm) | Percentage of 1,3-propane sultone (wt%) | Percentage of 1,3,6-hexanetricarbonitrile (wt%) | Cycle count |
|---|---|---|---|---|---|---|---|---|
| Example 3 | 15 | 1.8 | 8.3 | 7 | 0 | 0 | 0 | 550 |
| Example 28 | 15 | 1.8 | 8.3 | 7 | 0 | 3 | 0 | 590 |
| Example 29 | 15 | 1.8 | 8.3 | 7 | 0 | 0 | 1 | 580 |
| Example 30 | 15 | 1.8 | 8.3 | 7 | 0 | 3 | 1 | 610 |
| Example 31 | 15 | 1.8 | 8.3 | 7 | 4000 | 3 | 1 | 660 |

The results show that when the 1,3-propane sultone and/or a trinitrile compound (for example, 1,3,6-hexanetricarbonitrile) is further added to the electrolyte, a more stable electrode interface can be synergistically formed. This reduces the occurrence of side reactions, and can further improve the high-temperature cycling performance of the lithium-ion battery.

In this specification, reference to "an embodiment", "some embodiments", "one embodiment", "another example", "an example", "a specific example", or "some examples" means that at least one embodiment or example in the present application includes a specific feature, structure, material, or characteristic described in this embodiment or example. Therefore, descriptions in various places throughout this specification, such as "in some embodiments", "in these embodiments", "in an embodiment", "in another example", "in an example", "in a specified example", or "examples" do not necessarily refer to the same embodiment or example in the present application. In addition, a specific feature, structure, material, or characteristic herein may be combined in any appropriate manner in one or more embodiments or examples.

Although illustrative embodiments have been demonstrated and described, those skilled in the art should understand that the above embodiments are not to be construed as limiting the present application, and changes, substitutions, and modifications may be made to some embodiments without departing from the spirit, principles, and scope of the present application.

## Claims

1. An electrochemical device comprising a cell; the cell comprising a positive electrode, a negative electrode, an electrolyte, and a separator; wherein
an outermost electrode of the cell comprises a curved portion and a straight portion, a length of the straight portion is L mm, a radius of the curved portion is D mm, and 5 ≤ L/D ≤ 10; and
the electrolyte comprises a dinitrile compound, and based on a mass of the electrolyte, a percentage of the dinitrile compound is A%, and 4 ≤ A ≤ 10.

2. The electrochemical device according to claim 1, wherein 7 ≤ L/D ≤ 9.

3. The electrochemical device according to claim 1, wherein 5 ≤ L ≤ 30 or 1 ≤ D ≤ 5.

4. The electrochemical device according to claim 1, wherein 10 ≤ L ≤ 20 or 1.5 ≤ D ≤ 2.5.

5. The electrochemical device according to claim 1, wherein the dinitrile compound has Formula 1: 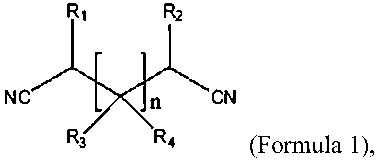 wherein:
R₁, R₂, R₃, and R₄ are each independently selected from hydrogen, halogen, or a substituted or unsubstituted C1-C5 alkyl group;
n is an integer from 0 to 8; and
when substituted, a substituent is a halogen.

6. The electrochemical device according to claim 1, wherein the dinitrile compound comprises at least one of the following compounds:

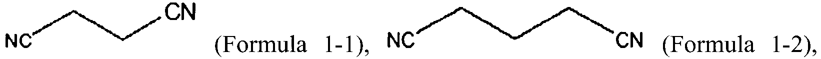

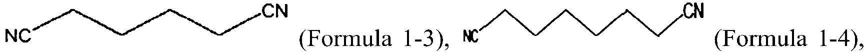

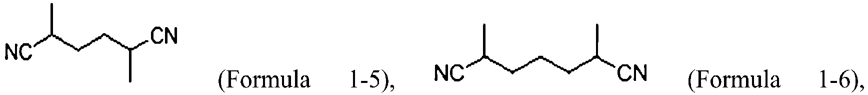

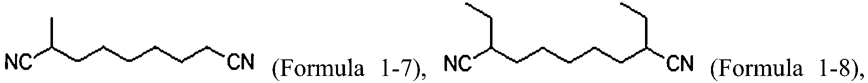

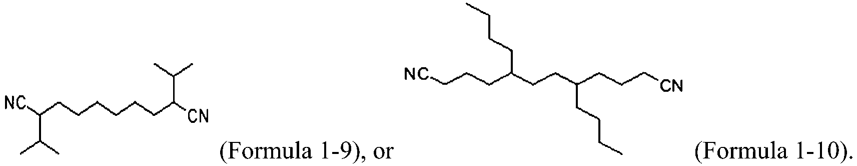

7. The electrochemical device according to claim 1, wherein a width of the cell is W mm, and 10 ≤ W ≤ 40.

8. The electrochemical device according to claim 1, wherein the positive electrode comprises a positive electrode active material, the positive electrode active material comprises a doping element, and the doping element is at least one selected from Ni or Al; and
based on a mass of the positive electrode active material, a percentage of the doping element is C ppm, and 3000 ≤ C ≤ 5000.

9. The electrochemical device according to claim 1, wherein the electrolyte further comprises a propionate; wherein the propionate comprises at least one of ethyl propionate, propyl propionate, butyl propionate, pentyl propionate, fluoroethyl propionate, fluoropropyl propionate, fluorobutyl propionate, or fluoropentyl propionate; and
based on a mass of the electrolyte, a percentage of the propionate is M%, and 20 ≤ M ≤ 60.

10. The electrochemical device according to claim 1, wherein the electrolyte further comprises at least one of 1,3-propane sultone, vinyl sulfate, vinylene carbonate, dimethyl carbonate, diethyl carbonate, ethyl methyl carbonate, or γ-butyrolactone; and
and the electrochemical device satisfies at least one of the following conditions:
(a) based on the mass of the electrolyte, a percentage of the 1,3-propane sultone is 0.5% to 5%;
(b) based on the mass of the electrolyte, a percentage of the vinyl sulfate is 0.1% to 1%;
(c) based on the mass of the electrolyte, a percentage of the vinylene carbonate is 0.1% to 1%;
(d) based on the mass of the electrolyte, a percentage of the dimethyl carbonate is 0.1% to 30%;
(e) based on the mass of the electrolyte, a percentage of the diethyl carbonate is 0.1% to 30%;
(f) based on the mass of the electrolyte, a percentage of the ethyl methyl carbonate is 0.1% to 30%; or
(g) based on the mass of the electrolyte, a percentage of the γ-butyrolactone is 0.01% to 5%.

11. The electrochemical device according to claim 1, wherein the electrolyte further comprises a trinitrile compound; wherein the trinitrile compound comprises at least one of 1,3,5-pentanetricarbonitrile, 1,2,3-propanetricarbonitrile, 1,3,6-hexanetricarbonitrile, or 1,2,3-tris(2-cyanoethoxy)propane; and
based on a mass of the electrolyte, a percentage of the trinitrile compound is 0.5% to 3%.

12. The electrochemical device according to claim 11, wherein, based on a mass of the electrolyte, a percentage of the trinitrile compound is 1% to 2.5%.

13. The electrochemical device according to claim 1, wherein the electrolyte further comprises a lithium salt; wherein the lithium salt comprises at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

14. The electrochemical device according to claim 1, wherein the separator comprises a porous substrate and a porous layer on a surface of the porous substrate, wherein the porous layer contains polyvinylidene fluoride; and a weight-average molecular weight of the polyvinylidene fluoride is 600,000 to 3,000,000.

15. An electronic device comprising the electrochemical device according to any one of claims 1 to 14.
